# FASCICULE DE BREVET EUROPEEN

(11) **EP 2 609 012 B1**
(45) Date de publication et mention de la délivrance du brevet: **22.02.2017**
(21) Numéro de dépôt: 11761653.2
(22) Date de dépôt: 23.08.2011
(51) Int. Cl.: B64D 13/06, B64D 41/00, F02C 7/32, B64D 31/00

(54) **PROCÉDÉ D'OPTIMISATION DU RENDEMENT ÉNERGÉTIQUE GLOBAL D'UN AÉRONEF ET GROUPE DE PUISSANCE PRINCIPAL DE MISE EN OEUVRE**
VERFAHREN ZUR OPTIMIERUNG DES GESAMTENERGETISCHEN NUTZEFFEKTS EINES FLUGZEUGS UND DIESBEZÜGLICHE HAUPTMOTORBAUGRUPPE
METHOD OF OPTIMISING THE TOTAL ENERGETIC EFFICIENCY OF AN AIRCRAFT AND RELATED MAIN POWERING GROUP

(30) Priorité: 25.08.2010 FR 1056761
(43) Date de publication de la demande: 03.07.2013
(73) Titulaire: Safran Helicopter Engines, 64510 Bordes (FR)
(72) Inventeur: HAILLOT, Jean Michel, F-64800 Beuste (FR)
(74) Mandataire: Gevers & Orès
(86) Numéro de dépôt international: PCT/FR2011/051943
(87) Numéro de publication internationale: WO 2012/025687

(56) Documents cités:
- EP-A2- 0 738 655
- EP-A2- 1 630 099
- EP-A2- 1 860 026
- EP-A2- 1 918 202
- WO-A1-98/48162
- WO-A1-99/12810
- WO-A1-2006/023981
- US-A- 3 965 673
- US-A- 4 091 613
- US-A- 4 684 081
- US-A1- 2009 088 063
- US-B1- 6 283 410

## Description

### DOMAINE TECHNIQUE

L'invention concerne un procédé d'optimisation du rendement global de l'énergie fournie à bord d'un aéronef, cette énergie pouvant être propulsive ou non propulsive, ainsi qu'un groupe de puissance principal de mise en oeuvre d'un tel procédé.

L'invention s'applique à la motorisation des aéronefs, c'est-à-dire essentiellement aussi bien à la motorisation d'avions (réacteurs, turboréacteurs, turbopropulseurs), qu'à la motorisation d'hélicoptères (turbomoteur).

Classiquement, dans un aéronef, la cabine qui accueille les passagers est climatisée et/ou pressurisée. Une entrée d'air de la cabine est connectée à un système de contrôle de l'environnement ECS (initiales de « Environmental Control System » en terminologie britannique) qui règle le débit, la température et/ou la pression de l'air en liaison avec, éventuellement, un circuit de recyclage entre le système ECS et la cabine.

### ÉTAT DE LA TECHNIQUE

Il est connu de récupérer de l'énergie entre l'air en sortie de cabine, qui présente une pression et une température élevées - typiquement 0,8 bar et 24°C -, et l'air hors de l'aéronef, de pression et température sensiblement inférieures - typiquement 0,2 bar et -50°C -. Par exemple, le document de brevet US 5 482 229 propose d'augmenter la température de l'air provenant d'un canal de sortie de la cabine via un échangeur thermique, traversé par de l'air circulant dans un canal issu d'un compresseur de moteur de l'aéronef et couplé au système ECS de la cabine. L'air provenant de la cabine, réchauffé par la traversée de l'échangeur, entraîne alors une turbine d'une unité de conversion de puissance qui fournit de l'énergie mécanique ou électrique à des accessoires de fonctionnement (pompes, compresseur de charge, alternateurs, etc.), avant d'être rejeté hors de l'aéronef.

Cependant une telle configuration ne permet pas d'utiliser l'air en sortie de cabine de manière fiable. En effet, la pression de cet air est régulée en cabine à un certain niveau, par exemple à 0,8 bar, et les variations de pression entre l'intérieur et l'extérieur de l'aéronef - par exemple 0,8 bar en interne et 0,2 bar en externe lorsque l'aéronef monte ou est à haute altitude - induisent des pertes de charge et des phénomènes intrusifs: la régulation ne peut plus se faire correctement car la pression dans la cabine est supérieure à la valeur de régulation initiale et les transitoires de pression inacceptables pour l'oreille des passagers. L'air ne peut plus s'échapper correctement car la turbine crée à tout instant des contre-pressions de blocage d'air en sortie de cabine. Dans ces conditions, la turbine de l'unité de conversion ne peut plus être opérationnelle, en particulier pendant les phases transitoires de montée en altitude et en haute altitude.

De plus, l'échangeur thermique n'est plus opérationnel au sol quand la porte de la cabine est ouverte. Cette architecture nécessite alors une installation thermique avec un échangeur supplémentaire couplée à un circuit d'air extérieur.

Par ailleurs, en cas de panne d'un équipement entraîné par l'unité de conversion, cette dernière part en survitesse.

En outre, l'utilisation d'air provenant d'un compresseur de moteur de l'aéronef est pénalisant en termes de bilan énergétique, par la déperdition dans les canalisations du fait de la distance entre l'échangeur et la sortie moteur. De plus, la puissance fournie au décollage par les moteurs au système ECS est surestimée par rapport à ses besoins en énergie. Le point de dimensionnement de la fourniture de puissance au système ECS est en effet déterminé à la vitesse minimale du corps HP (haute pression) du moteur principal, pour être toujours capable - même au ralenti - de fournir la puissance suffisante au système ECS.

De manière générale, les moteurs principaux sont dimensionnés pour pouvoir fournir, ponctuellement, une puissance propulsive importante, par exemple au décollage de l'aéronef, c'est-à-dire à vitesse élevée du corps HP, alors que dans les autres phases ils fournissent une puissance propulsive moyenne voire minimale, par exemple en descente, c'est-à-dire à vitesse faible du corps HP. La puissance propulsive se rapporte essentiellement à la poussée fournie par les réacteurs des avions et à la puissance mécanique fournie par les turbopropulseurs des avions et les turbomoteurs des hélicoptères. Ce surdimensionnement de fourniture de puissance entraîne en général une surconsommation spécifique, dans les phases de vol autres qu'au ralenti. Voir par exemple US 3 965 673 A, EP 1 630 099 A2.

### EXPOSÉ DE L'INVENTION

L'invention vise précisément à limiter la consommation spécifique par une adéquation entre le dimensionnement en fourniture de puissance et les besoins réels en puissance du système ECS de la cabine et plus généralement de l'aéronef, afin de supprimer les fournitures de puissances inutiles.

L'invention vise également à fournir de l'énergie de manière suffisamment fiable pour faire face aux cas de panne d'aéronef qui risquent d'entraîner des survitesses. Un autre but de l'invention est de favoriser l'association d'un grand nombre de moyens consommateurs d'énergie non propulsive, en particulier les consommateurs électriques, mécaniques et/ou hydrauliques, pour conserver dans toutes les phases de vol un bilan global énergétique positif entre la fourniture d'énergie et la consommation au regard des configurations connues, en particulier en phase transitoire. De plus, la présente invention va pouvoir permettre de récupérer de l'énergie thermique en sortie de cabine sans risque de contre-pression nuisible à la régulation, avec un échange thermique optimisé.

Pour ce faire, l'invention consiste, à proximité de la sortie de cabine, à fournir de l'énergie, en particulier de l'énergie pneumatique à la cabine, par une génération de puissance de classe moteur. Une génération de puissance est dite de classe moteur lorsque l'architecture de cette génération de puissance est apte à la certification moteur d'utilisation pendant toutes les phases de vol, au même titre qu'une génération de puissance fournie par un moteur principal.

Plus précisément, la présente invention a pour objet un procédé d'optimisation du rendement global de l'énergie fournie à bord d'un aéronef, selon la revendication 1.

La génération de puissance principale permet d'adapter l'apport en énergie pneumatique selon le strict besoin de la cabine, alors que les moteurs principaux fournissaient inutilement une puissance sensiblement supérieure au strict nécessaire, typiquement deux fois supérieure : ils sont surdimensionnés en bilan énergétique pneumatique car leur dimensionnement est calé sur le régime minimal du corps HP du moteur principal. L'apport en énergie pneumatique ne relevant plus des moteurs principaux selon l'invention, ceux-ci présentent un rendement sensiblement améliorés et le rendement global s'en trouve alors également sensiblement amélioré.

Par ailleurs, le rendement thermique global d'une génération de puissance principale ainsi dimensionnée est sensiblement égal à celui des moteurs principaux pour la fourniture de puissance non propulsive, en phase de descente ou en phase nominale de vol, typiquement de l'ordre de 20%. Une équipartition des puissances électriques est alors appliquée sans pénalité significative de consommation. A contrario, en phase de montée, la fourniture d'énergie électrique par les moteurs principaux sera privilégiée car le rendement des moteurs principaux est supérieur du fait d'une vitesse plus élevée du corps haute pression (HP) que celui d'une génération de puissance principale.

De plus, la contribution d'une génération de puissance principale supplémentaire fournit une redondance de moyens moteurs et donc renforce la tolérance aux pannes et la disponibilité de l'aéronef.

L'invention se rapporte également à un groupe de puissance principal ci-après groupe GPP, selon la revendication 2, apte à optimiser le rendement énergétique global selon le procédé ci-dessus. Un tel groupe de puissance principal a pour base un groupe de puissance du type groupe auxiliaire de puissance, en abrégé GAP (ou APU, initiales de « Auxiliary Power Unit », en terminologie anglaise), fiabilisé pour être de classe moteur et combiné à une structure de récupération d'énergie.

Les GAP équipent habituellement les aéronefs pour alimenter au sol les différents équipements consommateurs d'énergie (puissances électrique, pneumatique et hydraulique, conditionnement d'air), et démarrer les moteurs principaux. Lorsqu'un moteur est en panne, certains GAP sont suffisamment sécurisés pour pouvoir être redémarrés pendant le vol afin de tenter de redémarrer le moteur défaillant et/ou de fournir une partie de l'énergie électrique aux équipements en vol.

Un GAP se compose classiquement d'un générateur de gaz - comprenant au moins un compresseur d'entrée, une chambre de combustion et au moins une turbine de puissance - ainsi que des moyens d'entraînement direct des équipements (compresseur de charge, pompes à carburant et hydraulique, générateur électrique et/ou démarreur/générateur électrique, etc.), ou via une boîte de transfert de puissance avec une adaptation des vitesses de rotation. Un prélèvement d'air en sortie du compresseur de charge ou du compresseur d'entrée sert au démarrage pneumatique des moteurs principaux.

L'utilisation d'un GAP même sécurisé pendant toutes les phases de vol pour fournir de l'énergie non propulsive est considérée comme irréaliste du fait d'un rendement d'énergie défavorable par rapport aux moteurs principaux : faire fonctionner un GAP pendant toute la durée du vol présente une consommation supplémentaire de carburant.

Or, transformé en groupe de puissance de classe moteur pour fournir de l'énergie pneumatique au strict besoin de la cabine en utilisation permanente, un aéronef intégrant un tel groupe présente alors un bilan favorable.

A ce titre, dans un aéronef comportant des équipements consommateurs d'énergie, en particulier une cabine renouvelée en air et régulée en température et/ou en pression à l'aide d'un système de régulation ECS, des moteurs principaux de génération de puissance et une unité de contrôle de vol, un groupe de puissance principal selon l'invention intégré dans un compartiment isolé par une cloison feu des autres zones de l'aéronef et équipé d'une entrée d'air extérieur et d'une tuyère de sortie, comporte un groupe de puissance de classe moteur du type décrit ci-dessus équipé d'un générateur de gaz et d'une turbine de puissance d'entraînement d'équipements comprenant un compresseur de charge. Le compresseur de charge est couplé, via une commande de régulation qui communique avec l'unité de contrôle, au système ECS afin de fournir l'énergie pneumatique nécessaire à la cabine.

Selon des modes de réalisation particuliers :
- le groupe de puissance principal est couplé à une structure de récupération comportant au moins une turbine de récupération d'énergie d'entraînement des équipements avec la turbine de puissance et couplée, en entrée d'air, à la sortie de la cabine pour refroidir, en sortie d'air, les équipements, le compresseur de charge étant intégré à cette structure de récupération comme fournisseur d'énergie pneumatique à la cabine ;
- le compresseur de charge comporte un diffuseur d'air à calage variable comportant des pales d'orientation asservie par la commande de régulation apte à adapter strictement le débit d'air à la fourniture de pression et de débit demandée par ECS dans chaque phase de vol ;
- une variation du calage du diffuseur du compresseur de charge induit une variation du débit d'air avec un rapport de pression sensiblement constant : l'adéquation fourniture/besoin est ainsi satisfaite sans gaspillage significatif ;
- le compresseur de charge est couplé directement à la turbine de puissance, afin d'éviter toute perte d'énergie par un transfert de puissance autre que mécanique ;
- le générateur de gaz comporte un compresseur d'entrée qui peut servir de compresseur de charge
- la turbine de récupération est une turbine, de préférence centripète, à distributeur à calage variable comportant des pales d'orientation asservie par la commande de régulation ;
- au moins un capteur de pression régule l'ouverture et la fermeture des pales du diffuseur et du distributeur en liaison avec la commande d'asservissement ;
- la turbine de récupération éjecte un flux d'air en sortie dans le compartiment du groupe de puissance principal qui, après avoir refroidi les équipements et accessoires contenus dans le compartiment arrière, est évacué dans la tuyère d'échappement par un effet de trompe induit par la vitesse d'éjection des gaz du flux d'air chaud de la turbine de puissance ;
- la turbine de récupération est couplée à un dispositif d'insonorisation pour éviter la remontée des bruits aérodynamiques en cabine ;
- les positions de calage les plus ouvertes possibles peuvent aller au-delà de la pleine ouverture en position radiale dite position zéro ;
- une régulation du calage variable, entre une ouverture totale au sol et une fermeture progressive du flux d'air avec la montée en altitude, peut être automatisée par la commande de régulation en fonction de la pressurisation en cabine.

De manière générale, il a été pris en compte le fait que la perte de capacité de fourniture d'énergie du groupe principal, qui augmente avec l'altitude, soit au moins partiellement compensée en vol par une optimisation des positions des calages variables de la turbine de récupération en position la plus fermée compatible avec les contre-pressions en sortie de la cabine et du compresseur de charge dans la position la plus ouverte possible.

Le niveau en puissance thermodynamique compatible avec les contraintes de vol du groupe principal est minimisé : même si au sol les positions appropriées des calages variables pénalisent le rendement de la turbine de récupération et du compresseur de charge, le groupe de puissance principal ainsi dimensionné en puissance thermodynamique est alors capable de fournir suffisamment d'énergie au sol. Il a ainsi été préféré d'optimiser les rendements en vol. Le rendement global de ce compresseur ou de cette turbine de récupération, dans tout le domaine de vol, devient alors optimisé par la présence d'un diffuseur et/ou d'un distributeur à calages variables.

Selon d'autres modes de réalisation avantageux :
- des moyens de transmission de puissance des turbines de puissance et de récupération aux équipements mécaniques, pneumatiques, hydrauliques et/ou électriques de l'aéronef sont prévus, en particulier sous la forme d'une boîte de transfert de puissance ;
- la structure de récupération comporte un échangeur thermique présentant deux circuits d'échange thermique, un circuit primaire relié, en entrée, à la sortie de flux d'air chaud de la turbine de puissance et, en sortie, à la tuyère d'échappement, et un circuit secondaire relié, en entrée, à une sortie de flux d'air de la cabine et, en sortie, à la turbine de récupération ;
- le distributeur à calage variable de la turbine de récupération, couplé à des moyens de régulation, est apte à orienter le flux d'air provenant de l'échangeur, en particulier pendant les phases transitoires de l'aéronef ainsi qu'en altitude - les phases transitoires se rapportant aux phases de décollage, de montée, de descente et d'atterrissage -.

Dans ces conditions, la récupération d'énergie en sortie de cabine - sous forme de pression et/ou de température - est optimisée par la proximité de la source de puissance principale, tout en garantissant une sortie de flux d'air en sortie de cabine avec une contre-pression contrôlée dans la cabine. En outre, atteler la récupération d'énergie à une source de génération de puissance principale, et non à un simple compresseur ou un alternateur, permet d'absorber des survitesses, qui peuvent se déclencher en cas de panne, grâce à l'inertie produite par l'effet de masse des composants de la source de génération de puissance et de l'ensemble des consommateurs.

De plus, la récupération d'énergie en sortie de cabine peut être effectuée en complétant l'énergie potentielle contenue dans le flux d'air sortie cabine par de l'énergie thermique utilisée pour refroidir des systèmes dédiés à des équipements de l'aéronef avant d'être de nouveau enrichi par l'échange thermique entre lesdits flux d'air.

### BRÈVE DESCRIPTION DES FIGURES

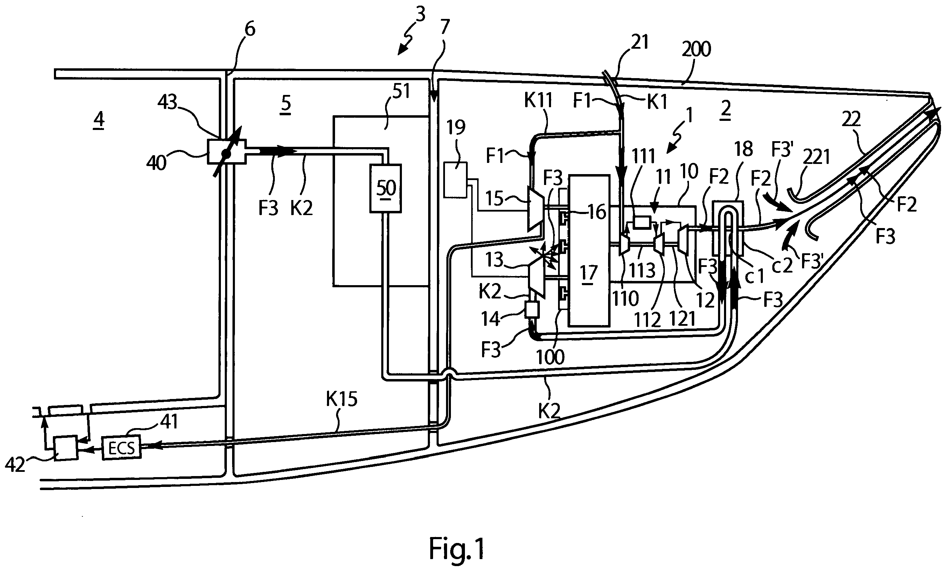

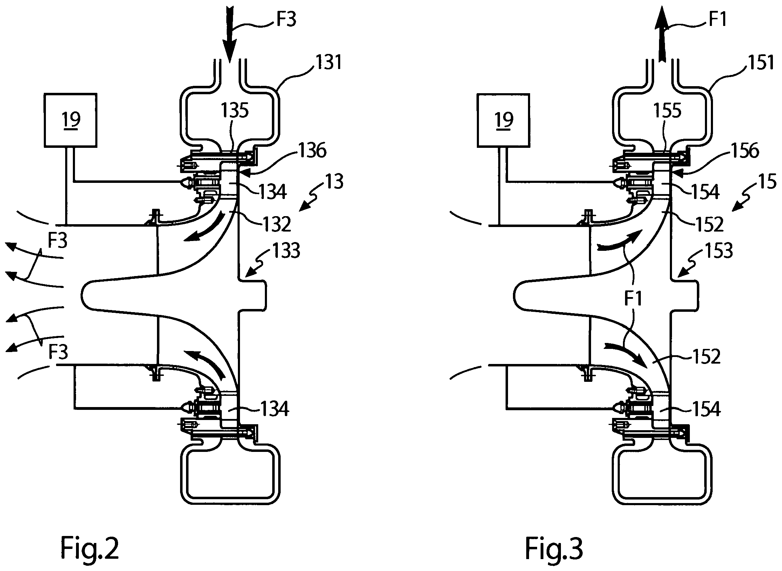

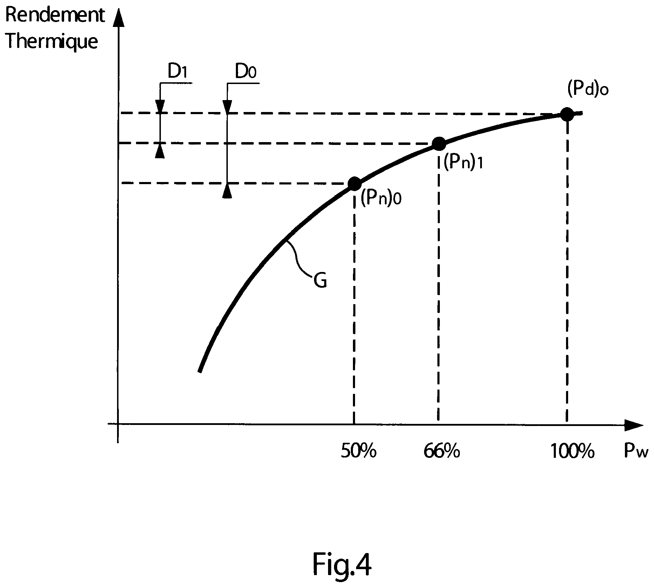

D'autres aspects, caractéristiques et avantages de l'invention apparaîtront dans la description non limitative qui suit, relative à des modes de réalisation particuliers, en référence aux dessins annexés qui représentent, respectivement :
- en figure 1, un bloc diagramme d'un exemple de groupe de puissance principal selon l'invention dans un compartiment arrière d'aéronef, en liaison avec une cabine d'aéronef équipée d'un système de contrôle d'environnement ECS ;
- en figure 2, une vue en coupe schématisée d'un exemple de turbine de récupération centripète munie d'un distributeur à calage variable du groupe de puissance principal ;
- en figure 3, une vue en coupe schématisée d'un exemple de compresseur de charge muni d'un distributeur à calage variable du groupe de puissance principal, et
- en figure 4, un graphique de la puissance fournie à un aéronef en fonction du rendement thermique des sources de puissance sur lequel sont portés le point nominal et le point de dimensionnement.

### DESCRIPTION DETAILLEE DE MODES DE REALISATION

Dans toutes les figures, les éléments identiques ou semblables, exerçant une même fonction, sont identifiés avec des signes de référence identiques ou dérivés.

En référence à la figure 1 d'un bloc diagramme schématisé, un groupe de puissance principal 1 est agencé dans un compartiment arrière 2 situé en aval de l'aéronef 3. La cabine des passagers 4 est située plus en amont et couplée au compartiment arrière 2 via un compartiment intermédiaire 5. Une cloison de pressurisation 6 sépare la cabine 4 du compartiment intermédiaire et une cloison feu 7 isole le compartiment intermédiaire 5 du compartiment arrière 2, équipé d'une entrée d'air extérieur 21 et d'une tuyère de sortie 22.

Le groupe de puissance principal 1 comporte un moteur 10 de type APU mais de classe moteur, combiné à une structure de récupération d'énergie. Le moteur auxiliaire se compose d'un générateur de gaz ou corps HP 11, comprenant un compresseur d'entrée 110 d'un flux d'air F1 provenant de l'entrée d'air 21, une chambre de combustion 111 et une turbine 112 d'entraînement du compresseur 110 par un arbre HP 113. Ce générateur de gaz est couplé en entrée à un canal de circulation d'air K1 monté sur l'entrée d'air extérieur 21 et, en sortie, à une turbine de puissance 12 qui délivre un flux d'air chaud F2, typiquement d'environ 500 à 600°C.

La structure de récupération d'énergie est centrée sur une turbine de récupération 13 en liaison avec un dispositif d'insonorisation 14, afin d'éviter la remontée des bruits aérodynamiques hors du compartiment, en particulier dans la cabine.

Cette turbine de récupération 13 est couplée à la turbine de puissance 12 pour entraîner des équipements 100 - mécaniques, pneumatiques (compresseurs), électriques (alternateurs) et/ou hydrauliques (pompes) - en particulier un compresseur de charge 15 et un démarreur/générateur 16, via une boîte de transfert de puissance 17 dans l'exemple. Cette boîte 17 est équipée de réducteurs et de renvois (non représentés) adaptés à la transmission de puissance. La turbine de puissance 12 fournit sa puissance à la boîte 17 via un arbre 121, cet arbre étant traversant dans l'exemple illustré. Alternativement cet arbre peut être non traversant ou un arbre extérieur par un boîtier de réduction approprié (non représenté). Ce boîtier est avantageusement équipé d'une roue libre pour sa déconnexion dans les phases de non récupération (par exemple dans le cas de porte de cabine avion ouverte).

Le compresseur de charge 15 alimente en air un système de contrôle d'environnement dit système ECS 41 de la cabine 4 pour lui transmettre, via un mélangeur de recyclage 42, de l'air comprimé provenant de l'entrée d'air extérieur 21 par une branche K11 du canal K1. Le compresseur de charge 15 est régulé par une commande de régulation 19 qui communique avec l'unité de contrôle (non représentée) afin de fournir l'énergie pneumatique nécessaire à la cabine. En variante, le compresseur d'entrée 110 peut servir de compresseur de charge 15 par un prélèvement d'air approprié.

Au moins une vanne variable 40, dite de régulation de pression cabine, fait circuler le flux d'air F3 de la sortie 43 de la cabine 4 à la structure de récupération d'énergie via un canal K2. Avantageusement, le canal K2 passe dans le compartiment intermédiaire 5 pour que le flux d'air F3 refroidisse les électroniques de puissance 50 d'une armoire 51 - ces accessoires étant dédiées à différents systèmes de fonctionnement de l'aéronef (train d'atterrissage, etc.), bien entendu non opérationnels lorsque la porte cabine est ouverte. En sortie du compartiment 5, le flux d'air F3 a une température d'environ 40°C. Le distributeur à calage variable peut avantageusement remplacer les vannes régulatrices de pression en sortie cabine.

La structure de récupération comporte dans cet exemple un échangeur thermique 18 équipé d'un circuit primaire C1, relié en entrée à la sortie du flux d'air chaud F2 et en sortie à la tuyère 22 - le flux F2 passant alors typiquement d'une température de l'ordre de 550°C à 300°C - et d'un circuit secondaire C2 relié en entrée au flux d'air F3 provenant de la cabine 4 et en sortie à la turbine de récupération 13. Le flux F3 a alors une température sensiblement plus élevée qu'à l'entrée (environ 40°), par exemple de l'ordre de 150°C. En sortie de la turbine de récupération 13, le flux d'air F3 est dispersé dans le compartiment arrière 2 pour refroidir les équipements 100 (à environ 40°) puis récupéré sous forme de flux F'3, par réflexion sur les parois 200 du compartiment, dans la tuyère 22. La récupération a lieu par un effet de trompe induit, à l'entrée élargie 221 de cette tuyère, par la vitesse d'éjection des gaz du flux d'air chaud F2 de la turbine de puissance 12 au sortir de l'échangeur 18.

La turbine de récupération 13 est détaillée en référence à la vue en coupe schématisée de la figure 2. La turbine de récupération est une turbine centripète équipée d'une chambre annulaire 131 d'amenée d'air (flux F3). Cet air est ensuite orienté par le distributeur à calage variable 136. La turbine 133 comporte un aubage fixe 132. Le flux d'air F3 en sortie est traité acoustiquement et diffusé dans le compartiment arrière 2 pour conditionner en température les équipements 100 et autres accessoires (incendie, vérins, etc.) non représentés. Alternativement, d'autres types de turbines peuvent être utilisées : axiale ou mixte (inclinée).

Le distributeur 136 est constitué de pales orientables 134 par calage variable qui guident le flux d'air provenant de l'échangeur 18 et accélère son écoulement. Ces pales sont à calage variable et leur orientation est adaptée par la commande de régulation 19 pendant les phases transitoires de l'aéronef ainsi qu'en altitude. En fonctionnement, un capteur de pression 135 régule l'ouverture et la fermeture des pales 134 du distributeur 132 en liaison avec la commande 19.

Le compresseur de charge 15 est détaillé ci-après au regard de la vue en coupe schématisée de la figure 3. Ce compresseur de charge reprend une structure semblable à celle de la turbine de récupération mais inversée par rapport à la circulation du flux d'air F1: chambre annulaire 151 - diffuseur variable 156 comportant des pales orientables 154 - et un compresseur centrifuge 153 équipé de pales fixes 152. Les pales orientables 154 à calage variable sont pilotées par la commande de régulation 19, en particulier pendant les phases transitoires et en altitude. Un capteur de pression 155 régule l'orientation des pales 154 via la commande 19 pour respecter les caractéristiques définies par le système ECS, à savoir un débit d'air 151 adapté à la fourniture de pression et de débit demandée (flèche F1).

Dans un exemple concret, le besoin en puissance pneumatique, pour un système ECS d'un avion classique, est typiquement de 180 kW. Un moteur principal est dimensionné pour fournir ces 180 kW au ralenti alors qu'en fonctionnement normal il délivre 360 kW dans la quasi-totalité des phases de vol. Un groupe de puissance principal selon l'invention est alors dimensionné pour fournir les 180 kW de puissance pneumatique strictement suffisants pour répondre aux besoins du système ECS.

La fourniture de puissance par le groupe de puissance principal selon l'invention ne se limite pas à la fourniture d'énergie pneumatique. Ce groupe peut en effet fournir de la puissance sur le corps HP des moteurs principaux via le démarreur/générateur 16 utilisé comme générateur électrique couplé au démarreur/générateur des moteurs principaux utilisé en mode moteur.

Ainsi, avec un bilan total des besoins en puissance pneumatique (180 kW) pour le système ECS, hydraulique (60 kW) pour les vérins et électrique (180 kW) pour les alternateurs, pompes, etc., soit typiquement 420 kW pour l'ensemble, l'utilisation d'un compresseur de charge, d'une turbine de récupération et/ou d'un échangeur selon la structure de récupération de l'invention permet de baisser sensiblement la perte d'énergie qui serait générée par l'utilisation exclusive de moteurs principaux pour ces postes : un compresseur de charge à diffuseur à calage variable permet par exemple un gain de 180 kW, une turbine de récupération à calage variable peut générer typiquement un gain de 90 kW et un échangeur un gain de 15 à 20 kW, soit en tout 285 à 290 kW. Les moteurs principaux ne contribuent alors à l'ensemble (420 kW) de ces fournitures de puissance hors puissance pneumatique (180 kW) qu'à hauteur d'un tiers, soit environ 80 kW, c'est-à-dire une fourniture sensiblement inférieure à celle du groupe de puissance principal qui lui fournit alors dans cet exemple 150 kW (70 kW et un tiers des 240 kW restants, soit 80 kW pour alimenter respectivement en énergie pneumatique et électrique/hydraulique).

Compte tenue d'un rendement du groupe de puissance principal (typiquement 20%) similaire à celui d'un moteur principal dans les phases de vol autres qu'en montée ou en cas de panne d'un des moteurs, et inférieur à celui d'un moteur principal (40%) en pleine utilisation (phase de montée ou autre moteur en panne), une équipartition de fourniture d'énergie entre les moteurs, que ce soit un moteur principal ou le groupe de puissance principal, permet d'optimiser le rendement global couvrant toutes les phases de vol, en fonctionnement nominal ou en cas de panne : par exemple l'équipartition de fourniture d'énergie hydraulique et électrique est de 1/3, 1/3, 1/3 pour deux moteurs principaux et un groupe de puissance principal en fonctionnement, et de 1/2, 1/2 en cas de panne d'un moteur principal.

De plus, l'équipartition permet d'optimiser le rendement de l'ensemble des sources de puissances formant une turbomachine comme illustré, en figure 4, par le graphique G de variation de rendement thermique en fonction de la puissance Pw fournie pour un moteur. Sont portés sur ce graphe :
- le point de dimensionnement de puissance (Pd)0 de la turbomachine ce point de dimensionnement est établi dans les conditions les plus sévères de demande de puissance (en général le cas de panne d'un moteur ou un décollage particulièrement difficile);
- le point nominal (Pn)0 de la turbomachine sans le groupe de puissance principal, et le point nominal (Pn)1 de la turbomachine avec le groupe de puissance principal en équipartition;

La variation de rendement thermique lié à la consommation de carburant, est optimisée lorsque la turbomachine intègre le groupe de puissance principal pour les raisons suivantes. Sans groupe de puissance principal, la variation D0 de rendement entre les points (Pn)0 et (Pd)0 est supérieure à la variation D1 entre les points (Pn)1 et (Pd)0 lorsque l'aéronef intègre un groupe de puissance principal, mais avec des puissances fournies sensiblement plus faibles. Cette situation traduit l'optimisation obtenue avec l'équipartition par minimisation de l'écart entre le point nominal et le point de dimensionnement. En effet, la première D0 correspond au passage de 50 à 100 % (correspondant à 200 % à fournir en cas de panne) de puissance fournie par un moteur passant des conditions nominales aux conditions de dimensionnement, soit 50% d'écart. La deuxième variation D1 correspond au passage de 33% (1/3 plus exactement) à 50% pour passer des premiers aux deuxièmes types de conditions. Avec un groupe de puissance principal, la turbomachine présente une diminution de puissance à fournir de 1/3 soit de 33% pour l'ensemble des moteurs principaux, avec un rendement global (correspondant à la variation de rendement) augmenté de l'écart (D0 - D1). Cet exemple ne tient pas compte de la possibilité de délestage qui peut être appliqué aux cas de panne. Que ce soit avec ou sans délestage, le rendement est amélioré.

L'exposé ci-dessus se réfère au fonctionnement d'un groupe de puissance principal. Le cas de panne de ce groupe n'a pas été évoqué mais il est bien entendu possible de prévoir, dans cette éventualité, d'autres équipements de secours pouvant se substituer à ce groupe par exemple en mode dégradé, en particulier au moins l'un des deux moteurs principaux qui fourniront alors une puissance supplémentaire, ou un APU de réserve, ou équivalent ou une combinaison de ces sources.

Par ailleurs, l'équipartition qui est évoqué dans le présent exposé signifie que les sources de puissance sont conçues pour permettre une telle équipartition dans les conditions présentées. Les contraintes physiques et règlementaires, en particulier mécaniques, à prendre en compte ne permettent, en général, que de tendre dans la mesure du possible vers les conditions idéales d'équipartition.

## Revendications

1. Procédé d'optimisation du rendement global de l'énergie fournie à bord d'un aéronef (3), cette énergie pouvant être propulsive ou non propulsive l'aéronef étant équipé d'une cabine de passagers (4) à flux d'air (F3) régulé, et de sources de puissance comprenant des moteurs principaux, **caractérisée en ce qu'**une telle optimisation consiste à prévoir, dans un environnement situé à proximité de la cabine (4), au moins un groupe de puissance de classe moteur (10), apte à la certification moteur d'utilisation pendant toutes les phases de vol, dimensionnée comme autre source de puissance de génération unique d'énergie pneumatique pour la cabine (4) et de génération au plus partielle d'énergies propulsive, hydraulique et/ou électrique pour le reste de l'aéronef (3), et à minimiser l'écart entre le point nominal ((Pn)1, (Pn)0) des sources de puissance en situation de fonctionnement de ces sources et le point de dimensionnement ((Pd)0) des contributions en énergie non propulsive de ces sources en situation de panne d'un moteur principal, par une équipartition des contributions de puissance des moteurs principaux et du groupe de puissance de classe moteur (10) en fonctionnement nominal et en cas de panne d'un moteur principal.

2. Groupe de puissance principal (1) de mise en oeuvre du procédé d'optimisation selon la revendication 1 dans un aéronef (3) comportant des équipements consommateurs d'énergie (100), une cabine (4) renouvelée en air et régulée en température et/ou en pression à l'aide d'un système de régulation ECS (41), des moteurs principaux de génération de puissance et une unité de contrôle de vol, le groupe de puissance principal étant intégré dans un compartiment (2) isolé par une cloison feu (7) des autres zones (5) de l'aéronef équipé d'une entrée d'air extérieur (21) et d'une tuyère de sortie (22), **caractérisé en ce qu'**il comporte un groupe de puissance de classe moteur (10), apte à la certification moteur d'utilisation pendant toutes les phases de vol, équipé d'un générateur de gaz (11) et d'une turbine de puissance (12) d'entraînement d'équipements (100) comprenant un compresseur de charge (15), ce compresseur de charge étant couplé, via une commande de régulation (19) qui communique avec l'unité de contrôle, au système ECS (41) afin de fournir l'énergie pneumatique nécessaire à la cabine (4), et **en ce que** les contributions de puissance des moteurs principaux et du groupe de puissance de classe moteur (10) sont réparties de manière égale en fonctionnement nominal et en cas de panne d'un moteur principal.

3. Groupe de puissance principal selon la revendication précédente, **caractérisé en ce qu'**il est couplé à une structure de récupération comportant au moins une turbine de récupération d'énergie (13) d'entraînement des équipements (100) avec la turbine de puissance (12) et couplée, en entrée d'air, à la sortie de la cabine (4) pour refroidir, en sortie d'air, les équipements (100), le compresseur de charge (15) étant intégré à cette structure de récupération comme fournisseur d'énergie pneumatique à la cabine (4).

4. Groupe de puissance principal selon la revendication précédente, dans lequel la turbine de récupération (13) éjecte un flux d'air en sortie dans le compartiment (2) du groupe de puissance principal (1) qui, après avoir refroidi les équipements et accessoires contenus dans le compartiment arrière (2), est évacué (F'3) dans la tuyère d'échappement (22) par un effet de trompe induit par la vitesse d'éjection des gaz du flux d'air chaud (F2) issu de la turbine de puissance (12).

5. Groupe de puissance principal selon l'une quelconque des revendications 2 à 4, dans lequel le compresseur de charge (15) comporte un diffuseur d'air (152) à calage variable comportant des pales d'orientation (154) asservie par la commande de régulation (19) apte à adapter strictement le débit d'air à la fourniture de pression et de débit demandée par ECS (41) dans chaque phase de vol.

6. Groupe de puissance principal selon la revendication précédente, dans le quel une variation du calage du diffuseur (152) du compresseur de charge (15) induit une variation du débit d'air avec un rapport de pression sensiblement constant.

7. Groupe de puissance principal selon l'une quelconque des revendications 2 à 6, dans le quel le compresseur de charge (15) est couplé directement à la turbine de puissance (12).

8. Groupe de puissance principal selon l'une quelconque des revendications 2 à 7, dans lequel le générateur de gaz (11) comporte un compresseur d'entrée (110) apte à servir de compresseur de charge (15).

9. Groupe de puissance principal selon l'une quelconque des revendications 3 à 8, dans lequel la turbine de récupération (13) est une turbine centripète à distributeur (132) à calage variable comportant des pales d'orientation (134) asservie par la commande de régulation (19).

10. Groupe de puissance principal selon les revendications 3 et 9, dans lequel au moins un capteur de pression (155, 135) régule l'ouverture et la fermeture des pales (154, 134) du diffuseur (152) et du distributeur (132) en liaison avec la commande de régulation (19).

11. Groupe de puissance principal selon la revendication précédente, dans lequel les positions de calage des pales (134, 154) les plus ouvertes possibles peuvent aller au-delà de la pleine ouverture en position radiale dite position zéro.

12. Groupe de puissance principal selon l'une des revendications 10 et 11, dans lequel une régulation du calage variable des pales (134, 154), entre une ouverture totale au sol et une fermeture progressive du flux d'air avec la montée en altitude, est automatisée par la commande de régulation (19) en fonction de la pressurisation en cabine (4).

13. Groupe de puissance principal selon l'une quelconque des revendications 2 à 12, dans lequel des moyens de transmission de puissance (17) des turbines de puissance (12) et de récupération (13) aux équipements (100) mécaniques, pneumatiques, hydrauliques et/ou électriques de l'aéronef (3) sont prévus.

14. Groupe de puissance principal selon la revendication précédente, dans lequel les moyens de transmission de puissance sont prévus sous la forme d'une boîte de transfert de puissance (17).

15. Groupe de puissance principal selon l'une quelconque des revendications 3 à 14, dans lequel la structure de récupération comporte un échangeur thermique (18) présentant deux circuits d'échange thermique, un circuit primaire (C1) relié, en entrée, à la sortie de flux d'air chaud (F2) de la turbine de puissance (12) et, en sortie, à la tuyère d'échappement (22), et un circuit secondaire (C2) relié, en entrée, à une sortie de flux d'air (F3) de la cabine (4) et, en sortie, à la turbine de récupération (13).

## Patentansprüche

1. Verfahren zur Optimierung des Gesamtertrags der Energie, die an Bord eines Luftfahrzeugs (3) geliefert wird, wobei diese Energie antreibend oder nicht antreibend sein kann, wobei das Luftfahrzeug mit einer Passagierkabine (4) mit reguliertem Luftstrom (F3) ausgestattet ist, und mit Leistungsquellen, die Hauptmotoren umfassen, **dadurch gekennzeichnet, dass** eine solche Optimierung darin besteht, in einer Umgebung, die sich in der Nähe der Kabine (4) befindet, mindestens ein Leistungsaggregat der Motorklasse (10) vorzusehen, das zur Zertifizierung als Betriebsmotor während aller Flugphasen geeignet ist, das als andere Leistungsquelle zur alleinigen Erzeugung von pneumatischer Energie für die Kabine (4) und zur mindestens teilweisen Erzeugung von Antriebs-, hydraulischer und/oder elektrischer Energie für den Rest des Luftfahrzeugs (3) ausgelegt ist, und zum Minimieren des Unterschieds zwischen dem Nennpunkt ((Pn)1, (Pn)0) der Leistungsquellen in Betriebssituation dieser Quellen und dem Auslegungspunkt ((Pd)0) der Beiträge an nicht antreibender Energie dieser Quellen in Pannensituation eines Hauptmotors durch eine gleichmäßige Verteilung der Leistungsbeiträge der Hauptmotoren und des Leistungsaggregats der Motorklasse (10) im Nennbetrieb und im Pannenfall eines Hauptmotors.

2. Hauptleistungsaggregat (1) zum Umsetzen des Optimierungsverfahrens nach Anspruch 1 in einem Luftfahrzeug (3), das Energieverbraucherausstattungen (100), eine Kabine (4) mit Lufterneuerung und Temperatur- und/oder Druckregulierung mit Hilfe eines ECS-Reguliersystems (41), Hauptleistungsmotoren zum Erzeugen von Leistung und eine Flugsteuereinheit umfasst, wobei das Hauptleistungsaggregat in einen Raum (2) integriert ist, der durch eine Brandschutzwand (7) von den anderen Zonen (5) des Luftfahrzeugs isoliert ist, der mit einem Außenlufteingang (21) und einer Ausgangsdüse (22) ausgestattet ist, **dadurch gekennzeichnet, dass** es ein Leistungsaggregat der Motorklasse (10) umfasst, das zur Zertifizierung als Gebrauchsmotor während allen Flugphasen geeignet ist, das mit einem Gasgenerator (11) und einer Leistungsturbine (12) zum Antreiben von Ausstattungen (100) ausgestattet ist, das einen Ladeverdichter (15) umfasst, wobei dieser Ladeverdichter über eine Regulierungssteuerung (19), die mit der Steuereinheit kommuniziert, mit dem ECS-System (41) gekoppelt ist, um pneumatische Energie zu liefern, die für die Kabine (4) erforderlich ist, und dass die Leistungsbeiträge der Hauptmotoren und des Leistungsaggregats der Motorklasse (10) beim Nennbetrieb und im Pannenfall eines Hauptmotors gleichmäßig verteilt sind.

3. Hauptleistungsaggregat nach dem vorhergehenden Anspruch, **dadurch gekennzeichnet, dass** es mit einer Rückgewinnungsstruktur gekoppelt ist, die mindestens eine Energierückgewinnungsturbine (13) zum Antreiben der Ausstattungen (100) mit der Leistungsturbine (12) umfasst und am Lufteingang, an dem Ausgang der Kabine (4) gekoppelt ist, um am Luftausgang die Ausstattungen (100) zu kühlen, wobei der Ladeverdichter (15) in diese Rückgewinnungsstruktur als Lieferant pneumatischer Energie zu der Kabine (4) integriert ist.

4. Hauptleistungsaggregat nach dem vorhergehenden Anspruch, wobei die Rückgewinnungsturbine (13) am Ausgang in den Raum (2) des Hauptleistungsaggregats (1) einen Luftstrom ausstößt, der, nachdem er die Ausstattungen und Zubehörelemente, die in dem hinteren Raum (2) enthalten sind, gekühlt hat, in die Auslassdüse (22) durch einen Saugeffekt, der von der Ausstoßgeschwindigkeit der Gase des Warmluftstroms (F2), der aus der Leistungsturbine (12) austritt, induziert wird, abgeleitet wird (F'3).

5. Hauptleistungsaggregat nach einem der Ansprüche 2 bis 4, wobei der Ladeverdichter (15) einen Luftverteiler (152) mit variabler Stellung umfasst, der Richtungsschaufeln (154) umfasst, gesteuert von der Regulierungssteuerung (19), der geeignet ist, den Luftdurchfluss an die Lieferung von Druck und Durchsatz, die von dem ECS (41) in jeder Flugphase gefordert wird, strikt anzupassen.

6. Hauptleistungsaggregat nach dem vorhergehenden Anspruch, wobei eine Variation der Stellung des Verteilers (152) des Ladeverdichters (15) eine Variation des Luftdurchsatzes mit einem im Wesentlichen konstanten Druckverhältnis induziert.

7. Hauptleistungsaggregat nach einem der Ansprüche 2 bis 6, wobei der Ladeverdichter (15) direkt mit der Leistungsturbine (12) gekoppelt ist.

8. Hauptleistungsaggregat nach einem der Ansprüche 2 bis 7, wobei der Gasgenerator (11) einen Eingangsverdichter (110) umfasst, der geeignet ist, um als Ladeverdichter (15) zu dienen.

9. Hauptleistungsaggregat nach einem der Ansprüche 3 bis 8, wobei die Rückgewinnungsturbine (13) eine Zentripentalturbine mit Verteiler (132) mit variabler Stellung ist, die Richtungsschaufeln (134) umfasst, die von der Regulierungssteuerung (19) gesteuert ist.

10. Hauptleistungsaggregat nach den Ansprüchen 3 und 9, wobei mindestens ein Drucksensor (155, 135) das Öffnen und das Schließen der Schaufeln (154, 134) des Verteilers (152) und des Verteilers (132) in Verbindung mit der Regulierungssteuerung (19) reguliert.

11. Hauptleistungsaggregat nach dem vorhergehenden Anspruch, wobei die Stellungspositionen der Schaufeln (134, 154) die so weit wie möglich offen sind, über das vollständige Öffnen in radialer sogenannter Nullposition hinausgehen können.

12. Hauptleistungsaggregat nach einem der Ansprüche 10 und 11, wobei eine Regulierung der variablen Stellung der Schaufeln (134, 154) zwischen einer vollständigen Öffnen am Boden und einem allmählichen Schließen des Luftstroms mit dem Steigflug durch die Regulierungssteuerung (19) in Abhängigkeit von der Druckbeaufschlagung in der Kabine (4) automatisiert ist.

13. Hauptleistungsaggregat nach einem der Ansprüche 2 bis 12, wobei Leistungsübertragungsmittel (17) der Leistungs- (12) und Rückgewinnungsturbine (13) an die mechanischen, pneumatischen, hydraulischen und/oder elektrischen Ausstattungen (100) des Luftfahrzeugs (3) vorgesehen sind.

14. Hauptleistungsaggregat nach dem vorhergehenden Anspruch, wobei die Leistungsübertragungsmittel in der Form eines Leistungsübertragungsgehäuses (17) vorgesehen sind.

15. Hauptleistungsaggregat nach einem der Ansprüche 3 bis 14, wobei die Rückgewinnungsstruktur einen Wärmeaustauscher (18), der zwei Wärmeaustauschkreisläufe aufweist, umfasst, einen Hauptkreislauf (C1), der am Eingang an den Warmluftstromausgang (F2) der Leistungsturbine (12) angeschlossen ist, und am Ausgang an die Auslassdüse (22), und einen Sekundärkreislauf (C2), der am Eingang an einen Luftstromausgang (F3) der Kabine (4) und am Ausgang an die Rückgewinnungsturbine (13) angeschlossen ist.

## Claims

1. Method for optimizing the overall efficiency of the energy supplied aboard an aircraft (3), this energy being propulsive or non-propulsive, the aircraft being equipped with a passenger cabin (4) with regulated air flow (F3), and with power sources including main engines, **characterized in that** such an optimization consists in providing, in an environment located near the cabin (4), at least one engine-type power unit (10), fit for the certification as engine usable during all flight phases, sized so as to serve as single other pneumatic energy-generating source for the cabin (4) and at most partly as other propulsive, hydraulic and/or electric energy-generating source for the rest of the aircraft (3), and in minimizing the power difference between the nominal point ((Pn)1, (Pn)0) of the power sources when said sources are functioning and the sizing point ((Pd)0) of the non-propulsive energy contributions of said sources in a situation of failure of a main engine, namely by equally dividing the power contributions of the main engines and engine-type power unit (10) under nominal operating conditions and in the event of a failure of a main engine.

2. Main power unit (1) for implementing the optimization method according to claim 1 in an aircraft (3) including energy-consuming equipments (100), a cabin (4) the air of which is renewed and the temperature and/or pressure of which are regulated by means of a regulation system ECS (41), main power-generating engines and a flight control unit, the main power unit being built into a compartment (2) which is insulated from the other zones (5) of the aircraft with a fireproof bulkhead (7) and fitted with an outside-air intake (21) and an exhaust nozzle (22), **characterized in that** it includes an engine-type power unit (10), fit for the certification as engine usable during all flight phases, fitted with a gas generator (11) and with a power turbine (12) for driving equipments (100) including a supercharger (15), said supercharger being coupled, via a regulation control (19) which communicates with the control unit, with the ECS system (41) in order to supply the necessary pneumatic energy to the cabin (4),and the power contributions of the main engines and engine-type power unit (10) are equally divided under nominal operating conditions and in the event of a failure of a main engine.

3. Main power unit according to the preceding claim, **characterized in that** it is coupled with a recovery structure that includes at least one energy-recovery turbine (13) for driving the equipments (100) with the power turbine (12) and that is coupled, on the air-inlet side, with the outlet of the cabin (4) to cool, on the air-outlet side, the equipments (100), the supercharger (15) being built into this recovery structure as a supplier of pneumatic energy to the cabin (4).

4. Main power unit according to the preceding claim, in which the recovery turbine (13) ejects, on the outlet side, an air flow into the compartment (2) of the main power unit (1) which, after it has cooled the equipments and auxiliary equipments contained in the aft compartment (2), is evacuated (F3') into the exhaust nozzle (22) by a jet pump action resulting from the efflux velocity of the hot air flow (F2) coming out of the power turbine (12).

5. Main power unit according to any of claims 2 to 4, in which the supercharger (15) includes a variable-pitch air diffuser (152) having blades (154), the adjustment of which is servo-controlled by the regulation control (19), capable of strictly adjusting the air flow to the supply of pressure and flow rate required by the ECS (41) in every flight phase.

6. Main power unit according to the preceding claim, in which a variation in the setting of the diffuser (152) of the supercharger (15) results in a variation in the air-flow rate with a substantially constant pressure ratio.

7. Main power unit according to any of claims 2 to 6, in which the supercharger (15) is directly coupled with the power turbine (12).

8. Main power unit according to any of claims 2 to 7, in which the gas generator (11) includes an intake compressor (110) capable of serving as a supercharger (15).

9. Main power unit according to any of claims 3 to 8, in which the recovery turbine (13) is a centripetal turbine with a variable-pitch guide vane assembly (132) having blades (134) the adjustment of which is servo-controlled by the regulation control (19).

10. Main power unit according to claims 3 and 9, in which at least one pressure sensor (155, 135) regulates the opening and closing of the blades (154, 134) of the diffuser (152) and guide vane assembly (132) in connection with the regulation control (19).

11. Main power unit according to the preceding claim, in which the most open possible setting positions of the blades (134, 154) can go beyond full opening into radial position, i.e. the so called zero position.

12. Main power unit according to one of claims 10 and 11, in which a regulation of the variable setting of the blades (134, 154), between full opening on the ground and progressive closing of the air flow while gaining altitude, is automated by means of the regulation control (19) according to pressurization in the cabin (4).

13. Main power unit according to any of claims 2 to 12, in which means (17) for transmitting power from the power (12) and recovery (13) turbines to the mechanical, pneumatic, hydraulic and/or electric equipments (100) of the aircraft (3) are provided.

14. Main power unit according to the preceding claim, in which the power-transmission means are provided in the form of a power-transfer box (17).

15. Main power unit according to any of claims 3 to 14, in which the recovery structure comprises a heat exchanger (18) having two heat-transfer circuits: a primary circuit (C1) connected, on the inlet side, with the hot-air-flow outlet (F2) of the power turbine (12) and, on the outlet side, with the exhaust nozzle (22); and a secondary circuit (C2) connected, on the inlet side, with an air-flow outlet (F3) of the cabin (4) and, on the outlet side, with the recovery turbine (13).
